# EUROPEAN PATENT SPECIFICATION

(11) **EP 3 880 001 B1**
(45) Date of publication and mention of the grant of the patent: **05.03.2025**
(21) Application number: 19828312.9
(22) Date of filing: 18.11.2019
(51) Int. Cl.: A23L 17/60, A23L 29/206, A23L 29/256, A23L 33/22

(54) **PLANT BASED GELLING FIBRE, METHOD AND APPLICATION THEREOF**
GELIERENDE FASER AUF PFLANZLICHER BASIS, VERFAHREN UND VERWENDUNG DERSELBEN
FIBRE GÉLIFIANTE À BASE DE PLANTES, PROCÉDÉ ET APPLICATION ASSOCIÉS

(30) Priority: 16.11.2018 IN 201841043279
(43) Date of publication of application: 22.09.2021
(73) Proprietor: Sea6 Energy Private Ltd., Bangalore 560065 (IN)
(72) Inventor: GIRI RAO V V, Hemanth, Bangalore 560065 (IN); SURYANARAYAN, Shrikumar, Bangalore 560065 (IN); NORI, Sri Sailaja, Bangalore 560065 (IN); KUMAR, Sawan, Bangalore 560065 (IN); SANGHE, Nithin M B, Bangalore 560065 (IN); VADASSERY, Nelson, Bangalore 560065 (IN); RAMANAN, Sinduja, Bangalore 560065 (IN)
(74) Representative: V.O.
(86) International application number: PCT/IB2019/059885
(87) International publication number: WO 2020/100124

(56) References cited:
- WO-A1-2005/118830
- WO-A2-2012/123422
- US-A- 3 849 395
- US-A- 5 496 936
- US-A1- 2008 317 926
- M FARASAT ET AL: "Antioxidant Activity, Total Phenolics and Flavonoid Contents of some Edible Green Seaweeds from Northern Coasts of the Persian Gulf", IRAN J PHARM RES., vol. 13, no. 1, 1 January 2014 (2014-01-01), pages 163 - 170, XP055668370
- MOSTAFA MAHMOUD SAMI ISMAIEL ET AL: "Role of pH on antioxidants production by Spirulina ( Arthrospira ) platensis", BRAZILIAN JOURNAL OF MICROBIOLOGY, vol. 47, no. 2, 1 April 2016 (2016-04-01), BR, pages 298 - 304, XP055668125, ISSN: 1517-8382, DOI: 10.1016/j.bjm.2016.01.003
- MEENA ET AL: "Preparation, characterization and benchmarking of agarose from Gracilaria dura of Indian waters", CARBOHYDRATE POLYMERS, APPLIED SCIENCE PUBLISHERS, LTD. BARKING, GB, vol. 69, no. 1, 30 March 2007 (2007-03-30), pages 179 - 188, XP022009502, ISSN: 0144-8617, DOI: 10.1016/J.CARBPOL.2006.09.020

## Description

### TECHNICAL FIELD

The present disclosure relates to the preservation and processing of polysaccharides having gelling properties from plants. More particularly, the present disclosure provides an antioxidant rich gelling fibre from plants such as seaweed and a method for preparation of the same. The gelling fibre of the present disclosure has improved gelling and/or thickening properties as compared to fibre obtained from fresh unprocessed plant sources such as seaweed and retains the natural antioxidants present in the fresh plant. In particular, seaweed in this disclosure refers to red seaweed. The said method of the present disclosure facilitates minimization of the amount of chemicals traditionally used in such processing methods and helps preserve the naturalness of the fresh plant source. The present disclosure further provides applications of the antioxidant rich gelling fibres of the present disclosure, specifically applications in the food industry.

### BACKGROUND OF THE DISCLOSURE

Dry seaweed has been used for several decades to make additives such as gelling fibre for food, dairy and pet food applications. These additives were prepared by using dry seaweed as raw material after short duration, high temperature alkali treatment (traditional SRC process) (2017, Iain C. Neish et al, Reflections on the Commercial Development of Eucheumatoid Seaweed Farming, Tropical Seaweed Farming Trends, Problems and Opportunities, Developments in Applied Phycology, pp 1-28, Edited by A. Q. Hurtado, Springer International publishing; 2005, US Patent US6893479 B2, Eswaran K et al). In this traditional SRC process, about 560 gm of potassium hydroxide is used to prepare about 1 kg of kappa-semi refined carrageenan. This indicates that large amounts of chemicals are used as they account for at least 56% by weight of the final product. The raw material for this process, i.e. dried seaweed is obtained by drying the fresh seaweed in the sun. However, drying either directly in the sun, or by using the well known "putih" method where seaweed is exposed to the sun inside plastic bags, does not preserve the natural antioxidant content (a combination of chlorophyll, phenolic compounds, flavonoids and carotenoids) of the seaweed. In addition, since the common commercial sources of carrageenans (a family of gel-forming and thickening polysaccharides) belong to red algae family, chemical bleaching is required to bleach the brown colour of the additives prepared from said dry seaweeds, especially for applications where such brown/red colour is not desirable. Various surveys studying market trends in food products indicate that consumers prefer to buy products which use natural ingredients instead of additives (2017, Roman S et al, The importance of food naturalness for consumers: Results of a systematic review, Trends in Food Science and Technology, 67, 44-57). Traditional processing of seaweed however employs treatment with high amounts of alkali at high temperature, thereby making the treatment harsh and destroying the natural properties of the seaweed. It is important therefore to develop a method to prepare gelling fibre from seaweed that avoids the alkali cooking at high temperature, minimizes the amount of chemicals used and preserves the naturalness of fresh seaweed.

Further background references include US 5,496,936 A; Farasat et al., Iran J. Pharm. Res. 2014, volume 13, pages 163-170; Ismaiel et al., Brazilian Journal of Microbiology 2016, volume 47, pages 298-304; US 2008/317926 A1; Meena et al., Carbohydrate Polymers 2007, volume 69, pages 179-188; US 3,849,395 A; and WO 2005/118830 A1.

It is common knowledge today that foods having high antioxidants are important contributors to better health. Antioxidants are known to sequester harmful free radicals generated due to disease or environmental conditions, and therefore protect cells and tissues from oxidative damage. In addition, antioxidants also lower the risk factors for cardiac diseases and cancers. Therefore, foods having high antioxidants are gaining popularity and market share. Given the high content of antioxidants in seaweed, seaweed can be considered as a favourable source of antioxidants. However, a drawback of using seaweed is that fresh seaweed has low shelf life and begins to disintegrate within 48 hours at room temperature and hence, it is difficult to store and transport fresh seaweed without microbial contamination. As a result, seaweeds are often dried under the sun, close to their natural habitat from where they are isolated, and thereafter used for further processing. However, such sun-dried seaweed gets bleached and loses its antioxidant properties, and thus precludes the preparation of an antioxidant rich seaweed pulp. Previously, Susilo Rudy (WO/2012/123422) reported that contacting fresh seaweed with alkali at high pH (for example, pH > 12) for a short duration of time (upto 6 hours), kept the fresh wet seaweed microbiologically stable. Therefore, the fresh seaweed can be preserved in the wet form without sun drying for further processing. However, such short incubation/maturation times with alkali does not result in a product having gelling properties required for commercial applications in food, dairy and pet food.

In contrast, the longer maturation periods, between 1-3 months of the fresh seaweed in alkali, are expected to result in higher gel strength product, but cause a significant loss of the natural antioxidants present in the seaweed at ambient temperatures.

Hence, it is imperative to develop a product that showcases both the aforementioned properties i.e. high gel strength/viscosity, along with retention of antioxidant content of fresh seaweed. To facilitate the same, appropriate process and process conditions need to be identified that result in such a final product while ensuing use of minimal amount of chemicals and processing, thus ensuring suitability for consumption.

### SUMMARY OF DISCLOSURE

Accordingly, in order to remedy the drawbacks of prior art, the present disclosure provides a plant based gelling fibre having water gel strength ranging from 100 g/cm² to 1000 g/cm², and antioxidant capacity ranging from 2mg GAE/g dry weight to 10mg GAE/g dry weight.

In an embodiment of the present disclosure, the plant is seaweed, preferably red seaweed of order Rhodophyceae.

In a further embodiment, said gelling fibre of the present disclosure has viscosity ranging from 10cP to 300cP at 75°C for a gel prepared from 1.5% solution of the gelling fibre in water; and has pH ranging from 7 to 14.

The present disclosure further provides a method of producing the plant based gelling fibre as described above, said method comprising steps of:
a) obtaining pulp of the plant;
b) adjusting pH of the pulp to at least 12;
c) allowing maturation of the pH adjusted pulp for time period ranging from 1 week to 4 weeks; and
d) optionally reducing pH of the matured pulp followed by milling the matured pulp to form the gelling fibre.

In addition to the above, the present disclosure relates to use of the above described plant based gelling fibre for preparing a gel or as a food additive.

### BRIEF DESCRIPTION OF THE ACCOMPANYING FIGURES

In order that the invention may be readily understood and put into practical effect, reference will now be made to exemplary embodiments as illustrated with reference to the accompanying figures. The figures together with a detailed description below, are incorporated in and form part of the specification, and serve to further illustrate the embodiments and explain various principles and advantages, in accordance with the present invention wherein:
**Figure 1** depicts results of study of microbiological stability of seaweed pulp at (a) pH 7, (b) pH 10 and (c) pH 13.
**Figure 2** (a) depicts dried flakes of green gelling fibre prepared by the method of the present disclosure (b) depicts aqueous gel of 1.5% (w/w) green gelling fibre prepared by the method of the present disclosure.
**Figure 3** depicts co-relation of gel strength of the gelling fibre prepared by the method of the present disclosure with maturation time. Data shown in (a) is for gelling fibres prepared from *K. alvarezii,* and that shown in (b) is for gelling fibres prepared from *K. striatus.*
**Figure 4** depicts antioxidant content of native seaweed, and of gelling fibres prepared according to Example 4 but at different alkali maturation times, and for a sample of commercially available carrageenan.
**Figure 5** depicts change in the viscosity of the gelling fibre prepared (from *K. alvarezii*) by the method of the present disclosure with maturation time.
**Figure 6** depicts settling of cocoa in chocolate milk by the gelling fibres prepared from K. *striatus.*

### DETAILED DESCRIPTION OF THE DISCLOSURE

In view of the drawbacks associated, and to remedy the need created by the available art in the field of technology related to preparation of antioxidant rich gelling fibres, the present disclosure aims to describe such a product and provide a method for the same. However, before describing the product or method in greater detail, it is important to take note of the common terms and phrases that are employed throughout the instant disclosure for better understanding of the technology provided herein.

As used throughout the present disclosure, the phrases 'plant based' and 'plant based gelling fibre' are used in the context of the natural source of the gelling fibre, wherein reference to 'plant' in said phrases envisages, in addition to plants that usually fall within the purview of said term, plants such as but not limited to green algae and red algae.

As used throughout the present disclosure, the phrase 'fresh seaweed' refers to seaweed freshly harvested directly from its natural marine environment or habitat or seaweed used within 48 hours of being isolated from its natural marine environment or habitat. The natural environment or habitat may accordingly be selected from a group comprising but not limiting to waterbodies such as ocean and sea.

As used throughout the present disclosure, the term 'preservation' refers to the standard dictionary meaning of the term, which in the context of the present disclosure implies long term storage of the seaweed pulp in a form that is as close to its natural form as possible, retaining its natural properties such as but not limiting to colour and antioxidant capacity.

As used throughout the present disclosure, the phrase 'pulp of the plant', 'pulp of plant' refer to the pulp sourced from a plant, wherein said pulp maybe prepared fresh and directly from the plant source or may be procured commercially.

As used throughout the present disclosure, the phrase 'wet pulp' refers to the pulp of seaweed obtained after separation of the seaweed pulp from the seaweed juice after the grinding of seaweed. This processing of the seaweed is meant to encompass any method or technique commonly known or conventionally used by a person skilled in the art to separate seaweed pulp from its juice.

As used throughout the present disclosure, the terms 'maturation' and 'incubation', used interchangeably refer to the period of storage of alkali treated seaweed pulp at ambient temperatures, preferably ranging from 20°C to 45°C and preferably in dark conditions. Said storage is performed while maintaining the alkaline pH of the alkali treated seaweed being subjected to maturation.

As used throughout the present disclosure, the phrase 'gelling fibre' refers to dry or wet fibre prepared from seaweed pulp as per the protocol of the present disclosure, and has high viscosity, preferably of at least 10 cP and/or gelling properties, including water gel strength, preferably of at least 100 g/cm².

As used throughout the present disclosure, the phrase 'native seaweed' refers to fresh seaweed harvested from the ocean, sea, or other water body, before any further processing is carried out by itself or any gel prepared therefrom by conventional techniques.

As used throughout the present disclosure, the term 'antioxidant capacity', in the context of the gelling fibre of the present disclosure, refers to that measured as per the protocol in Example 9. Nonetheless, a person skilled in the art knows and understands the meaning of the said term and regardless of the protocol employed for measurement of the said antioxidant capacity, as long as the values of a gelling fibre fall within the range of the antioxidant capacity provided by the present disclosure using the protocol of Example 9, it (gelling fibre) falls within the purview of the present disclosure.

As used throughout the present disclosure, the phrases/terms 'gel strength', viscosity', 'antioxidant capacity' and their obvious variants used in the context of the gelling fibre refer to said properties of gel obtained from said gelling fibre. Further, in the context of the present disclosure, the phrase 'water gel' refers to gels prepared from the gelling fibre of the present disclosure by using water and further, the phrase 'KCI gel' refers to gels prepared in presence of KCl as a gel strengthening agent. In an exemplary embodiment, KCl gels are water gels prepared in the presence of/containing 0.2% KCl. Similar variants of gels prepared from the gelling fibre of the present disclosure, in the presence of other such strengthening agents, fall within the purview of the present disclosure.

As used throughout the present disclosure, terms such as 'grinding', 'mixing', 'separation', 'drying', 'milling', 'rehydration' and their variants refer to said processes being performed by techniques well known and practiced in the art in this field of technology, unless otherwise specifically defined.

As used throughout the present disclosure, ranges are a shorthand for describing each and every value within the range. Any value within the range can be selected as the terminus of the range. With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity. The use of the expression "at least" or "at least one" suggests the use of one or more elements or ingredients or quantities, as the use may be in the embodiment of the disclosure to achieve one or more of the desired objects or results. Throughout this specification, the word "comprise", or variations such as "comprises" or "comprising" wherever used, will be understood to imply the inclusion of a stated element, integer or step, or group of elements, integers or steps, but not the exclusion of any other element, integer or step, or group of elements, integers or steps.

Accordingly, to reiterate, the present disclosure relates to a gelling fibre having high gel strength or viscosity and significant antioxidant capacity retained from its plant source, and a method for the preparation thereof. Said gelling fibre of the present disclosure is a plant based gelling fibre, preferably a seaweed based gelling fibre.

Particularly, the present disclosure provides a plant based gelling fibre having water gel strength ranging from 100 g/cm² to 1000 g/cm² and antioxidant capacity ranging from 2mg GAE/g dry weight to 10mg GAE/g dry weight.

In a non-limiting embodiment, said plant based gelling fibre of the present disclosure has water gel strength of 100 g/cm², 150 g/cm², 200 g/cm², 250 g/cm², 300 g/cm², 350 g/cm², 400 g/cm², 450 g/cm², 500 g/cm², 550 g/cm², 600 g/cm², 650 g/cm², 700 g/cm², 750 g/cm², 800 g/cm², 850 g/cm², 900 g/cm², 950 g/cm² or 1000 g/cm².

In another non-limiting embodiment, the plant based gelling fibre of the present disclosure has antioxidant capacity of 2mg GAE/g dry weight, 2.5mg GAE/g dry weight, 3mg GAE/g dry weight, 3.5mg GAE/g dry weight or 4mg GAE/g dry weight, 4.5mg GAE/g dry weight, 5mg GAE/g dry weight, 5.5mg GAE/g dry weight, 6mg GAE/g dry weight, 6.5mg GAE/g dry weight, 7mg GAE/g dry weight, 7.5mg GAE/g dry weight, 8mg GAE/g dry weight, 8.5mg GAE/g dry weight, 9mg GAE/g dry weight, 9.5mg GAE/g dry weight or 10mg GAE/g dry weight.

In a further embodiment, the gelling fibre has viscosity ranging from 10cP to 300cP at 75 °C for a gel prepared from 1.5% solution of the gelling fibre in water. Said viscosity is measured according to the protocol in Example 8. In an embodiment, the viscosity of the plant based gelling fibre of the present disclosure is 10cP, 50cP, 100cP, 150cP, 200cP, 250cP or 300cP.

In an embodiment, the plant based gelling fibre is prepared from seaweed. Without being intended to be limited by the scope, it is preferred that the seaweed is red seaweed, more preferably of order Rhodophyceae.

In a non-limiting embodiment, the seaweed is selected from a group comprising *Kappaphycus striatus, Eucheuma cottonii, Eucheuma denticulatum (spinosum,) Halymenia durvillaea, Kappaphycus alvarezii, Chondrus crispus, Solieria chordalis, Porphyra purpurea, Euchuema isiforme, Hypnea musciformis, Solieria filiformis, Mastocarpus stellatus, Mastocarpus papillatus, Porphyra capensis, Gelidium amansii, Furcerllaria spp., Gigartina spp, Gracillaria spp., Iridea spp., Anatheca spp., Meristotheca spp., Ahnfeltia spp. Gynmogongrus spp. Phyllophora spp.* and combinations thereof.

In a non-limiting embodiment, the gel strength of the plant based gelling fibre described above is further increased in the present of salt such as but not limited to potassium chloride (KCl) and calcium chloride (CaCl₂). Said salts act as strengthening agent in the gel prepared from the gelling fibre of the present disclosure. In an exemplary embodiment, the salt is KCl. Such gels prepared from the gelling fibre in the presence of KCl have been referred to as 'KCl gel' in the present disclosure.

In a further non-limiting embodiment, the plant based gelling fibre has a gel strength at least 50% higher than that of the gel obtained from untreated plant source, and has at least 50% of antioxidant capacity as that present in the plant. In other words, the plant based gelling fibre has a gel strength of at least 50%, at least 55%, at least 60%, at least 65%, at least 70%, at least 75%, at least 80%, at least 85%, at least 90%, at least 95% or at least 100% higher than that of the gel obtained from untreated plant source; and has 50%, 55%, 60%, 65%, 70%, 75%, 80%, 85%, 90%, 95% or 100% of antioxidant capacity as that present in the plant.

In another embodiment, the gelling fibre has mineral (ash) content ranging from 10% to 40% by dry weight. In a non-limiting embodiment, the gelling fibre has mineral (ash) content of 10%, 15%, 20%, 25%, 30%, 35% or 40% by dry weight.

Final pH of the above described plant based gelling fibre, in a non-limiting embodiment, ranges from 7 to 14, for example 9.5 to 10.5. In an embodiment, the pH of the plant based gelling fibre of the present disclosure is 7, 7.1, 7.2, 7.3, 7.4, 7.5, 7.6, 7.7, 7.8, 7.9. 8, 8.1, 8.2, 8.3, 8.4, 8.5, 8.6, 8.7, 8.8, 8.9. 9.0, 9.1, 9.2, 9.3, 9.4, 9.5, 9.6, 9.7, 9.8, 9.9, 10, 10.1, 10.2, 10.3, 10.4 or 10.5, 10.6, 10.7, 10.8, 10.9, 11, 11.1, 11.2, 11.3, 11.4, 11.5, 11.6, 11.7, 11.8, 11.9, 12, 12.1, 12.2, 12.3, 12.4, 12.5, 12.6, 12.7, 12.7, 12.8, 12.9, 13, 13.1, 13.2, 13.3, 13.4, 13.5, 13.6, 13.7, 13.8, 13.9 or 14,.

Said gelling fibre of the present disclosure may be prepared in multiple forms. For the purposes of ease, storage and application, it is preferred that the gelling fibre is in the form of a powder.

In an embodiment of the present disclosure, the form of the gelling fibre is selected from a group comprising powder (free flowing), granules, fine wet pulp, and paste or wet paste.

In a non-limiting embodiment, the gelling fibre of the present disclosure has a colour between light green and dark green.

The plant based gelling fibre of the present disclosure is further suitable for applications such as but not limiting to suitable dairy, meat and pet food applications. In a preferred embodiment, the plant based gelling fibre of the present disclosure finds application in industries such as the food industry, as a stabilizer. Said plant based gelling fibre of the present disclosure is suitable for stabilizing suspensions such as those found in nutritional drinks. Other suitable applications include but are not limited to stabilization of food products such as ice creams, dairy desserts, salad dressings, soups, sauces and animal food. A preferred application of the plant based gelling fibre of the present disclosure is its action as a stabilizer in flavoured milk, preferably chocolate milk. Nonetheless, a person skilled in the art understands and is aware of all such applications of the gelling fibre of the present disclosure in the food industry, and all such applications are within the purview of the present disclosure.

With regard to the method of preparing the plant based gelling fibre of the present disclosure, when the plant is seaweed, to begin with, the fresh seaweed, upon being harvested from its natural environment or habitat, is maintained at a specific pH which allows the pulp to be resistant to microbiological degradation for an extended period of time, and allows the pulp to retain its freshness for its use even after extended periods of time. In an embodiment, the seaweed is maintained at alkaline pH. Alkali treatment of fresh seaweed causes hydrolysis of the chlorophyll to water soluble chlorophyllin. Therefore, one would expect that contact of fresh seaweed with alkali would lead to the leaching out of the water soluble chlorophyllin. Surprisingly, the present disclosure reports that the chlorophyllin is significantly retained up to 4 weeks, and therefore the kinetics of the leaching out of water soluble chlorophyllin is significantly slowed down in the seaweed, when the seaweed is contacted with alkali from 1 week to 4 weeks. The method of preparing the plant based gelling fibres of the present disclosure broadly encompasses steps of alkali treatment and maturation, followed by processing to form the gel fibre.

Accordingly, the present disclosure provides a method of preparing the plant based gelling fibre as described above, wherein said method comprises steps of -
a) obtaining pulp of the plant;
b) adjusting pH of the pulp to at least 12;
c) allowing maturation of the pH adjusted pulp for time period ranging from 1 week to 4 weeks;
d) optionally reducing pH of the matured pulp; and
e) optionally milling the matured pulp to form the gelling fibre.

In other words, the method of preparing the plant based gelling fibre as described above comprises steps of -
a) obtaining pulp of the plant;
b) adjusting pH of the pulp to at least 12;
c) allowing maturation of the pH adjusted pulp for time period ranging from 1 week to 4 weeks;
d) optionally reducing pH of the matured pulp followed by milling the matured pulp to form the gelling fibre.

In a preferred embodiment, the plant based gelling fibre is prepared from seaweed i.e. in the method of the present disclosure, the plant is seaweed. Said seaweed is fresh seaweed or dried seaweed.

When the seaweed is fresh seaweed, the fresh seaweed maybe sourced from its natural environment or habitat selected from a group comprising but not limited to waterbodies such as ocean and sea. After said sourcing, the seaweed may be washed to remove impurities such as but not limiting to sand, mud and seashells. This seaweed is a raw material for preparation of additives such as gelling fibre. Storage of the seaweed as raw material in warehouses thus becomes important to even out fluctuations in the supply chain of fresh seaweed and in-turn allowing a steady supply of raw material to processing factories that prepare the additives. The method of the present disclosure provides for an initial step of alkali treatment of the pulp allows for preservation of the pulp, processed from fresh seaweed, wherein in view of its maintenance at alkaline pH, it is microbiologically stable, and is then used to prepare the gelling fibres by the subsequent steps of the above defined method. The method of the present disclosure minimizes the amount of chemicals traditionally used in the preparation of gelling fibres from plants such as seaweed and preserves its naturalness.

Alternatively, the seaweed may be sourced in dried form, wherein the dried form of the seaweed is prepared by drying the fresh seaweed in the absence of the sun. The drying in the absence of the sun may be carried out by methods such as but not limiting to drying in a hot air oven at a temperature ranging from 50°C to 70°C for 6 hours to 24 hours until moisture content is reduced to 5% to 15%. When said dried form of seaweed is employed as starting material, the dried seaweed is rehydrated prior to preparation of the pulp that is used to prepare the gelling fibre of the present disclosure, wherein said rehydration of the dried seaweed is affected by contacting it with water. As an example, the rehydration may be performed for 2 hours or more. The ratio of dried seaweed to water for rehydration ranges from 0.5:1 to 0.05:1, wherein the dried seaweed is contacted with the water by methods such as but not limiting to dipping, coating and spraying. The microbiologically stable form of the pulp yielded by processing of the seaweed dried in the absence of the sun retains its ability to form green coloured pulp as opposed to seaweed dried in the sun, which retains its brown colour even after rehydration and processing by the method of the present disclosure. This is of particular relevance when the seaweed being employed is red algae, such as but not limiting to *Kappaphycus alvarezii.*

In an embodiment of the present disclosure, when the plant is a seaweed, the seaweed is red seaweed of order Rhodophyceae. In a non-limiting embodiment of the present disclosure, the seaweed is selected from a group comprising *Kappaphycus striatus, Eucheuma cottonii, Eucheuma denticulatum (spinosum,) Halymenia durvillaea, Kappaphycus alvarezii, Chondrus crispus, Solieria chordalis, Porphyra purpurea, Euchuema isiforme, Hypnea musciformis, Solieria filiformis, Mastocarpus stellatus, Mastocarpus papillatus, Porphyra capensis, Gelidium amansii, Furcerllaria spp., Gigartina spp, Gracillaria spp., Iridea spp., Anatheca spp., Meristotheca spp., Ahnfeltia spp. Gynmogongrus spp. Phyllophora spp.* and combinations thereof.

Thus, in an exemplary embodiment, the present disclosure provides a method for preparing a gelling fibre from seaweed, said method comprising:
a) obtaining pulp of the seaweed;
b) adjusting pH of the seaweed pulp to at least 12;
c) allowing maturation of the pH adjusted seaweed pulp for time period ranging from 1 week to 4 weeks;
d) optionally reducing pH of the matured pulp; and
e) optionally milling the matured pulp to form the gelling fibre.

In an alternate embodiment, in a variant of the above described method for preparation of a gelling fibre from seaweed, wherein the raw material is fresh seaweed dried in the absence of the sun, said method comprises:
a) rehydrating the seaweed dried in the absence of sun;
b) obtaining pulp of the seaweed;
c) adjusting pH of the seaweed pulp to at least 12;
d) allowing maturation of the pH adjusted seaweed pulp for time period ranging from 1 week to 4 weeks;
e) optionally reducing pH of the matured pulp; and
f) optionally milling the matured pulp to form the gelling fibre.

In an embodiment of the present disclosure, in the aforementioned method(s), the pulp is obtained from the plant by mechanical processing of the plant to separate the pulp from the juice. Said separation is carried out by standard/conventional mechanical techniques and using equipment well known to a person skilled in this field of technology. Alternatively, the pulp is obtained commercially. Said pulp obtained commercially may be in a form suited for direct application to the method of the present disclosure, starting from step (b) of the general method steps defined above.

Optionally, once the pulp is obtained, prior adjusting pH of the pulp to at least 12, the pulp is washed with washing agent selected from a group comprising fresh water, sea water and separated plant juice or any combination thereof to remove impurities such as but not limiting to sea-shells, sand, stones and mud.

Subsequently, pH of the pulp is adjusted to at least 12 by contacting the pulp with a pH modifying agent. In a non-limiting embodiment, said pH modifying agent is selected from a group comprising potassium hydroxide, sodium hydroxide, calcium hydroxide, magnesium hydroxide, ammonium hydroxide, lithium hydroxide, sodium carbonate and potassium carbonate or any combination thereof. In an embodiment of the present disclosure, the pH modifying agent is employed in the form of a solution of the pH modifying substance in solvent selected from a group comprising water and seaweed juice or a combination thereof. In an embodiment, strength of the pH modifying agent ranges from 0.5M to 13M. In a preferred embodiment, the pH modifying agent employed in the above described method is a solution of potassium hydroxide, wherein molarity of the solution of potassium hydroxide is at least 1M.

In an embodiment, ratio of the pulp to the pH modifying agent ranges from 1:1 to 33:1, preferably 17:1 when using a 7.5M potassium hydroxide solution. When the plant is seaweed, the method of the present disclosure minimizes the amount of alkali added to the seaweed pulp, as the method employs 35% to 65%, preferably 40% of the alkali when compared with other commercially employed seaweed processing protocols. In an exemplary embodiment, the method of the present disclosure reduces the amount of alkali employed for processing of the seaweed by 40% to 65%, when compared with commercially employed seaweed processing protocols. This is in part because dipping of whole fresh seaweed consumes more alkali due to the higher moisture content of 94-96% in the biomass, as compared to using fresh wet seaweed pulp that has a much lower moisture content of 80-85%.

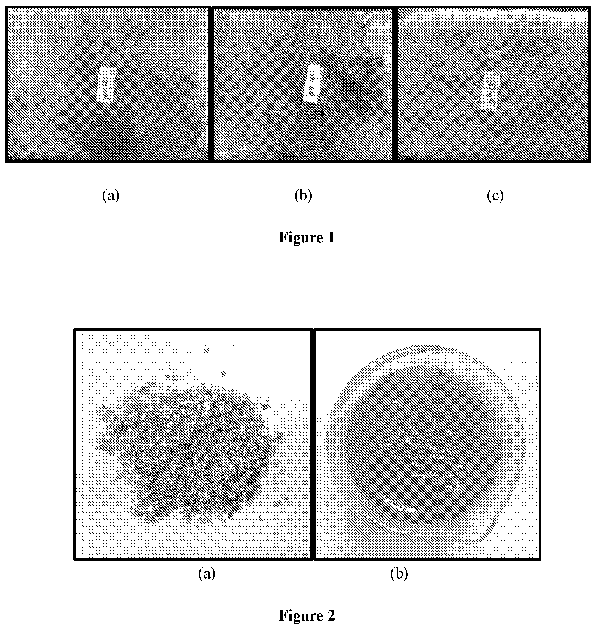

The pH adjusted pulp obtained by the above described alkali treatment is microbiologically stable and shows no microbial contamination, in contrast to similar products maintained at lower pH as shown in Figure 1.

In a non-limiting embodiment of the present disclosure, the pH adjusted pulp is optionally treated with hydrogen peroxide ( 500 ppm to 5000 ppm) or optionally with ozone or with chlorine dioxide for a time period of up to 4 hours at room temperature to meet the microbiological specifications required for food products.

After subjecting the pulp to pH adjustment, the pH adjusted pulp is subjected to maturation wherein said maturation is at ambient temperature; and wherein said temperature ranges from 20°C to 45°C. In a non-limiting embodiment, the maturation is performed at a temperature of 20°C, 25°C, 35°C, 40°C or 45°C. Said maturation is perfomed while maintaining the pulp at the aforementioned alkaline pH of 12, 12.5, 13, 13.5 or 14. Maintaining the alkaline pH, the pulp is subjected to maturation at ambient temperature for 1 week to 4 weeks. In an embodiment, the pulp is allowed to mature at alkaline pH for 1 week, 1.5 weeks, 2 weeks, 2.5 weeks, 3 weeks, 3.5 weeks or 4 weeks. In a non-limiting embodiment, the maturation of the pH adjusted pulp is allowed to take place in the dark.

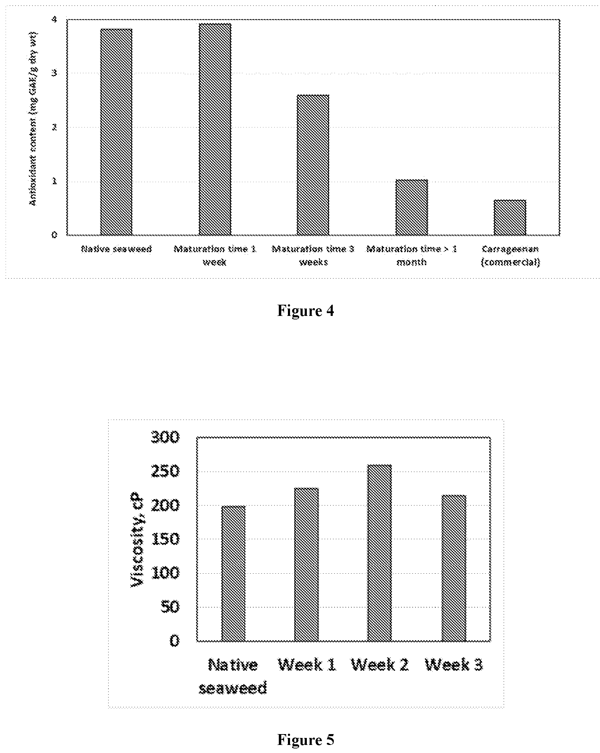

The matured pulp has moisture content ranging from 70% to 95%. In an embodiment, the matured pulp has moisture content of 70%, 75%, 80%, 90% or 95%. Further, the matured pulp retains the antioxidant content of natural seaweed for up to 1 month. After 1 month, the antioxidant content starts to reduce (Figure 4). Said pulp is further processed in the subsequent steps of the above described method to form the gelling fibre of the present disclosure.

After said maturation, the matured pulp is optionally subjected to pH reduction, wherein the pH reduction is achieved by washing of the matured pulp, acid treatment of the matured pulp or a combination of both.

In an embodiment of the present disclosure, the washing is performed with washing agent selected from a group comprising water, seaweed juice and a solution of potassium chloride, or any combination thereof. When the washing is with the solution of potassium chloride, it comprises 0.1% to 10% of potassium chloride in water. Post washing, the excess water is drained out. Said washing reduces the pH of the matured pulp.

In an embodiment, optionally, after maturation or after washing, pH of the matured pulp is reduced by acid treatment of the pulp wherein the matured pulp is contacted with acidifying agent. In an alternate embodiment, the matured pulp is first contacted with acidifying agent and then subjected to washing.

In case of said pH reduction with the acidifying agent, the acidifying agent is selected from a group comprising hydrochloric acid, sulfuric acid, ascorbic acid, citric acid, citrus fruit juice, acetic acid and vinegar or any combination thereof. In an exemplary embodiment of the present disclosure, the acidifying agent employed in the above described method is a solution of hydrochloric acid (HCl), wherein the concentration of the acidifying agent ranges from 1 M to 8 M. In a preferred embodiment of the present disclosure, the acidifying agent is 3.8 M HCl.

In a non-limiting embodiment of the present disclosure, the ratio of the matured pulp to the solution of hydrochloric acid ranges from 20:1 to 100:1.

In an embodiment of the present disclosure, pH of the matured pulp is optionally reduced due to the washing of matured pulp or acid treatment of matured pulp or a combination of both to 7 to 11, preferably 9.5 to 10.5. In a non-limiting embodiment, pH of the matured pulp is reduced to 7, 7.5, 8, 8.5, 9, 9.5, 9.25, 10, 10.25 or 10.5.

After the required amount of maturation between 1 week to 4 weeks, the mature, optionally pH adjusted pulp is subjected to grinding into a finer powder or wet pulp by a process known as milling wherein the milling is either dry milling to obtain a fine powder or wet milling to obtain finer wet particles or a wet paste.

Wet milling yields a very fine pulp (with particle size less than 2 mm) of the gelling fibre which when heated and subsequently cooled, results in gel form of the fibre. The said heating to prepare the gel for example is carried out at a temperature of 80°C to 90°C for 30 minutes to 90 minutes followed by allowing the gel to set at a lower temperature, for example of 4°C to 15°C, for 12 hours to 16 hours. In an embodiment, when the gelling fibre is in the form of a fine pulp, it is mixed with water in a ratio of 0.05:1 to 0.075:1 and then subjected to the heating as described above.

On the other hand, dry milling of the mature, optionally pH adjusted pulp is preceded by drying in the absence of sun to a moisture content ranging from 5% to 15%, to yield dried powder of the gelling fibre.

In an embodiment, the dried powder form of the gelling fibre may be used to prepare the gel form of the gelling fibre by rehydration and boiling in water. For example, the dried powder form of the gelling fibre may be mixed with water to form a suspension which is subjected to heating at a temperature of 80°C for 30 minutes followed by allowing the gel to set at a lower temperature. In a non-limiting example, the dried powder form of the gelling fibre may be mixed with water in a ratio of 0.01:1 to 0.015:1 to form a suspension which is ultrasonicated at an amplitude of 20 Hz for 1 minute in 3 second pulses to obtain a homogeneous solution at a temperature of 80°C. Further, the solution is heated at 80°C to 90°C for 30 minutes to 90 minutes with intermittent stirring and the resulting hot solution is poured into suitable containers and allowed to set into a gel at a temperature of 4°C to 15°C for a time period of 12 hours to 16 hours.

In an embodiment of the present disclosure, when the intermediate is allowed to mature for a time period ranging from 1 week to 4 weeks and employed in the method described above, it results in a green coloured gelling fibre, with colour ranging between light green and dark green, showing the retention of chlorophyll from the source plant. The said gelling fibres maybe in dried form or gel form and possess important properties such as antioxidant capacity, viscosity and gel strength. These properties however vary between different form of the fibres and the maturation time of the matured pulp from which they are formed.

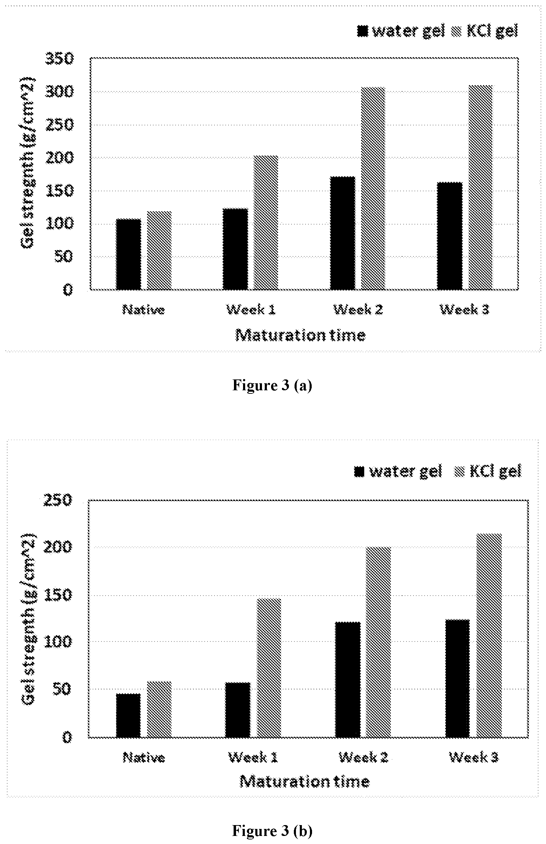

In an exemplary embodiment, one of the properties, the gel strength increases with increase in maturation time as depicted in Figure 3. In an embodiment of the present disclosure, said water gel strength of the gelling fibre after 1 to 4 weeks of maturation, ranges from 100 g/cm² to 1000 g/cm². The water gel strength is further increased in the presence of a solution of potassium chloride. In an embodiment of the present disclosure, the potassium chloride acts as a gel strengthening agent. In a non-limiting embodiment, addition of 0.2% KCl to the water gel yields gelling fibre having increased gel strength.

In another embodiment of the present disclosure, viscosity of a gel prepared from 1.5% w/w solutions of the gelling fibre at 75°C ranges from 10cP to 300cP. The viscosity increases with increase in maturation time between 1 week to 4 weeks (Figure 5).

In yet another embodiment of the present disclosure, free antioxidant capacity of the gelling fibre ranges from 2mg GAE/g dry weight to 10mg GAE/g dry weight, preferably at least 2mg GAE/g dry weight. This antioxidant potential however reduces with increase in maturation time, particularly beyond 4 weeks (Figure 4). However, the free antioxidant capacity of the gelling fibre obtained from the method of the present disclosure is at least 50% higher than that of dried gelling fibres (such as carrageenan) known in the art, obtained from seaweed dried in the sun (Figure 4). This is typical of the gelling fibre prepared by the present disclosure, wherein the maturation time was within 1 week to 4 weeks.

In a further embodiment of the present disclosure, mineral (ash) content of the dried gelling powder ranges from 10% by dry weight to 40% by dry weight.

Further to the above mentioned method, once the gelling fibre is obtained, the gelling fibre is used to prepare a gel; wherein the gel is prepared by heating and subsequently cooling to set the gel.

In addition to the above, the present disclosure relates to use of the gelling fibre as described above for preparing a gel or as a food additive. Said gelling fibre of the present disclosure or food additive prepared from the same are fit for human or animal consumption and are capable of acting as stabilizer in food products.

As explained above, when the gelling fibre is in the form of very fine pulp (with particle size less than 2 mm), it can be used to prepare a gel by heating and subsequent cooling. he said heating for example is carried out at a temperature of 80°C to 90°C for 30 minutes to 90 minutes followed by allowing the gel to set at a lower temperature, for example of 4°C to 15°C, for 12 hours to 16 hours. In an embodiment, when the gelling fibre is in the form of a fine pulp, it is mixed with water in a ratio of 0.05:1 to 0.075:1 and then subjected to the heating as described above.

Alternatively, the dried powder form of the gelling fibre may be used to prepare the gel form of the gelling fibre by rehydration and boiling in water. For example, the dried powder form of the gelling fibre may be mixed with water in a ratio of 0.01:1 to 0.015:1 to form a suspension which is ultrasonicated at an amplitude of 20 Hz for 1 minute in 3 second pulses to obtain a homogeneous solution at a temperature of 80°C . Further, the solution is heated at 80°C to 90°C for 30 minutes to 90 minutes with intermittent stirring and the resulting hot solution is poured into suitable containers and allowed to set into a gel at a temperature of 4°C to 15°C for a time period of 12 hours to 16 hours.

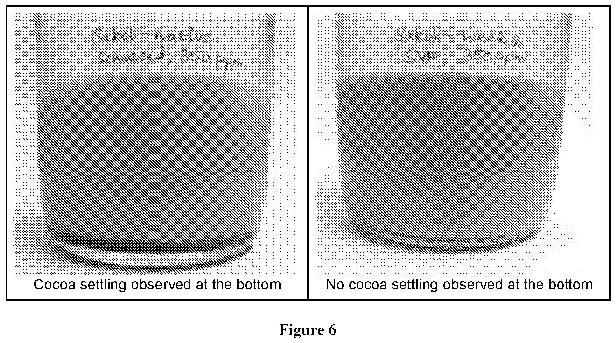

As depicted in Figure 6, the gelling fibre of the present disclosure inhibits settling of solids in food products such as chocolate milk, which generally shows a tendency of settling of cocoa at the bottom - while native seaweed is unable to suspend the cocoa when used at a concentration of 350 ppm, the alkali matured gelling fibre of 2 weeks maturation time is able to suspend the cocoa when used at a concentration of 350 ppm.

While it is clear that the present disclosure describes a plant based gelling fibre with texturizing properties, it also provides an unexpected effect in preservation of the high antioxidant content of the source plant, for example fresh seaweeds. The advantages of said retention of antioxidant capacity, forming an antioxidant rich gelling fibre of the present disclosure are:
- Health benefits to humans, as they have anti-cancer, anti-viral and immune system protective properties;
- Clean label ingredient for use in human and pet food;
- Minimization of the amount of chemicals employed processing of the plant pulp, thus increasing the possibility of consumer acceptance for gelling fibre prepared from the plant pulp.

While the instant disclosure is susceptible to various modifications and alternative forms, specific aspects thereof has been shown by way of examples and drawings and are described in detail below. However, it should be understood that it is not intended to limit the invention to the particular forms disclosed, but on the contrary, the intention is to cover all modifications, equivalents, and alternatives falling within the spirit and the scope of the invention as defined by the appended claims.

### EXAMPLES

The present disclosure is further described with reference to the following examples, which are only illustrative in nature and should not be construed to limit the scope of the present disclosure in any manner.

### Example 1

### Preparation of green coloured seaweed pulp (microbiologically stable intermediate) from fresh red seaweed

About 1 kg of fresh *Kappaphycus alvarezii* from Bali, Indonesia was ground and was mechanically separated into seaweed juice and wet pulp having weight of about 650g and about 350g, respectively. The wet pulp had a moisture content of about 80%. This pulp was mixed with about 21ml of 7.5M potassium hydroxide (KOH) solution for about 10 minutes to 15 minutes. After mixing, the wet pulp changed its colour from red to bright green, and the pH of the pulp was found to be about 12.5.

### Example 2

### Effect of pH on microbiological stability of preserved seaweed pulp

Batch 1: About 350gm of seaweed pulp was prepared as mentioned in Example 1. This pulp, without being subjected to any further treatment, was maintained at pH of about 7.

Batch 2: Another 350gm of seaweed pulp was prepared as per Example 1 was mixed with sufficient amount of 1.5M potassium hydroxide solution to achieve a pH of about 10.

Batch 3: Another 350gm of seaweed pulp was mixed with sufficient amount of 1.5M potassium hydroxide solution to achieve a pH of about 13, as described in Example 1.

All three batches of seaweed pulp were subjected to 20 days of incubation in the dark at room temperature (20°C to 40°C). After 20 days, spoilage and fungal growth was observed in the batches 1 and 2. However, no fungal growth was observed in the batch prepared and maintained at pH 13 (Figure 1).

### Example 3

### Comparison of seaweed pulp prepared from seaweed dried in the absence of the sun vs. seaweed pulp prepared from seaweed dried in the sun

About 350 gm of wet pulp from fresh seaweed was prepared as described in Example 1 and dried in the absence of the sun, in a hot air oven, at a temperature of about 60°C for about 12 hours. The drying was continued till the moisture content of the pulp was reduced to about 10%. About 80gm of the dried wet pulp was obtained. The dried pulp was rehydrated by adding 270 ml of water. After about 2 hours, the rehydrated pulp was mixed with about 21ml of 7.5M KOH solution for about 10 to 15 minutes. After mixing, the rehydrated pulp changed its colour from red to bright green, and the pH of the pulp was maintained at about 12.5.

Further, to analyse the effect of drying of the seaweed in the sun on the pulp prepared therefrom, 1 kg of fresh *Kappaphycus alvarezii* from Bali, Indonesia was dried in the sun to obtain about 125g of sun-dried seaweed having a moisture content of about 20%. The sun-dried seaweed was ground into particles having particle size of about 3mm to about 10mm. The sun-dried seaweed particles were mixed with about 375ml of water and rehydrated to a moisture content of about 80 %. After about 2 hours, the rehydrated pulp was mixed with about 30ml of 7.5M KOH solution for about 10 to about 15 minutes. After mixing, unlike the pulp prepared from the seaweed dried in the absence of the sun, no change in colour was observed and the rehydrated pulp from the sun-dried seaweed preserved its brown colour, and the pH was about 12.5.

Therefore, drying of fresh seaweed in the absence of the sun helped preserve the green colour of the pulp.

### Example 4

### Preparation of dried green coloured gelling fibre

About 370 gm of the microbiologically stable intermediate was prepared as described in Example 1. The microbiologically stable intermediate was stored in the dark at room temperature which ranged from about 20°C to about 40°C, depending on season and time of the day. After 25 days (3.5 weeks) of said storage in the dark, the microbiologically stable intermediate was mixed with about 370 ml of water to form a slurry. This storage period is referred to as the maturation time. About 20ml of 50% (v/v) hydrochloric acid (HCl) was added dropwise while mixing the slurry well. The final pH of the resultant slurry was in the range of about 9.5 to about 10.5. Excess water was drained out and the pH adjusted green pulp was obtained. This wet pulp can be used, as is, as a gelling fibre, or can be optionally milled into a pulp of finer particle size or optionally milled into a wet paste. The pH adjusted green wet pulp is dried in the absence of the sun until the moisture content was reduced to about 10 % or lower. About 40 gm of dried green gelling fibre was obtained from dry milling of the dried pH adjusted pulp (Figure 2). The dried gelling fibre is obtained as granules or flakes. These can be optionally ground into a fine powder by milling in any suitable grinding or milling equipment and used further as a gelling fibre.

### Example 5

### Comparison of the amount of alkali required to prepare the green coloured gelling fibre vs. the amount required for preparation of semi-refined carrageenan

Based on Examples 1 and 4, about 21ml of about 7.5M KOH was used to prepare about 40gm of dried green gelling fibre which is equivalent to about 221gm of KOH pellets for every 1000gm of dried green gelling fibre. In the traditional SRC process (which employs seaweed directly dried in the sun and further, does not require separation of pulp from the seaweed), about 560gm of KOH pellets are used to prepare about 1000gm of kappa-semi refined carrageenan. Therefore, the amount of alkali used in the method of the present disclosure is only about 40% of that used to prepare kappa-semi refined carrageenan commercially, thus significantly reducing the amount of chemical employed for seaweed processing and preparation of gelling fibre.

### Example 6

### Preparation of gel from gelling fibre and measurement of gel strength

About 1.5gm of dried green gelling fibre obtained from Example 4 was mixed with about 100ml water to form a 1.5% (w/w) suspension which was heated at about 80°C for about 1 hour with intermittent stirring. The hot suspension was ultrasonicated at an amplitude of about 20 Hz for about 1 minute in 3 sec pulses to obtain a homogeneous solution at about 80°C. The resultant solution was heated at about 80°C for about 30 minutes with intermittent stirring. The hot solution was poured into two 50 ml beakers of equal dimensions and allowed to set into a gel at about 4°C for about 12 hours to about 16 hours. The gels were incubated at about 10°C for about 1 hour and the gel strength was measured using a Texture analyzer, Brookfield CT3 1000. Photograph of the green gel is shown in Figure 2. This is termed as a water gel. Similarly, a 1.5% (w/w) aqueous suspension of green gelling fibre in the presence of about 0.2% potassium chloride was prepared, and its gel strength was measured. This is termed as KCl gel. Gel strength in the presence of potassium chloride is known to be higher than that of the water gel.

### Example 7

### Analysis of relation between gel strength of the gelling fibre and maturation time

Maturation time of the microbiologically stable intermediate produced as described in Example 1 was varied upto 3 weeks and compared with that of the native seaweed. Gel strength of gelling fibre prepared from the microbiologically stable intermediates subjected to the different maturation times was measured according to example 6. The gel strength of the gelling fibre obtained from different maturation times was noted and compared. The water gels and KCl gels for maturation times of weeks 1, 2 and 3, for *K. alvarezii* (Figure 3(a)), and that of weeks 2 and 3 for *K*. *striatus* (Figure 3(b)) are all above 100 g/cm². Most importantly, it was observed that gel strength increases with increasing maturation time (Figure 3(a) for *K. alvarezii,* and Figure 3(b) for *K. striatus*).

### Example 8

### Measurement of viscosity, and its relation with maturation time

A 1.5% (w/w) aqueous suspension of green gelling fibre (either from *K. alvarezii or K. striatus*) was prepared as described in Example 6 and its viscosity was measured at 75°C using a Brookfield DV-II+ Pro viscometer with attached water bath. The viscosity of the native seaweed, gelling fibre with maturation times of 1, 2, and 3 weeks were all in the range of 200-270 cP (Figure 5).

Viscosity measured above the melting temperature is an indication of the average molecular weight of the polysaccharides in the fibre, especially when the salt content in the samples is similar. This also shows that the method of preparing the green gelling fibre does not cause any degradation of the polysaccharides.

### Example 9

### Measurement of free antioxidant capacity

About 30 mg of dried green gelling fibre (as prepared in Example 4, either from *K. alvarezii* pulp or *K. striatus* pulp) was suspended in about 1 ml of a solvent comprising about 50 % (v/v) methanol in water at a pH of about 2 (using HCl) and was stirred continuously for about 1.5 hours at about 25°C. The supernatant from this first cycle of extraction was separated and kept aside. The residue was resuspended in 1ml of the same solvent and stirred continuously for about 1.5 hours at about 25°C. The supernatant from this second cycle of extraction was separated and kept aside. About 10µl of each supernatant was mixed with about 200 µl of about 2% (w/v) sodium carbonate in water and incubated for about 5 minutes at about 25°C. Subsequently, about 10µl of Folin-Ciocalteu reagent was added and mixed well. After a 30 min incubation at about 25°C, the absorbance was measured at 750 nm after suitable dilution. A linear standard curve was obtained using Gallic acid (GA) in the range of about 0µg/ml to about 200µg/ml of GA. The absorbance of the sample was expressed as Gallic acid equivalents (GAE) in µg/ml. The free antioxidant capacity of the dried green gelling fibre was estimated by adding the GAE of supernatants obtained from both cycles of extraction and was observed to be in the range of about 2 mg to about 4mg GAE/g dry weight of green gelling fibre.

The free antioxidant capacity of the dried seaweed pulp obtained immediately after drying in the absence of the sun as shown in Example 3 was also measured and found to be about 4mg GAE/g dry weight (Figure 4).

It was observed that the free antioxidant capacity of dried green gelling fibre was also about 4mg GAE/g dry weight when prepared according to Example 4, but with a maturation time of about 1 week (Figure 4).

It was observed that that maturation time of up to about 4 weeks retains at least about 50% of the antioxidant content present in native seaweed (Figure 4).

It was observed that the free antioxidant capacity of dried gelling fibre, optionally obtained by maturation over 1 month or optionally by bleaching, was very low at about 1 mg GAE/g dry weight (Figure 4).

It was observed that the free antioxidant capacity of refined carrageenan (commercially available sample) that is usually prepared from sun dried seaweed was very low at about 0.7 mg GAE/g dry weight (Figure 4).

### Example 10

### Cocoa suspension functionality in chocolate milk is observed for the alkali matured gelling fibre

222.5 gm of skimmed milk was weighed into 500 ml beakers. The beakers were placed in water bath maintained at about 45°C, until the dry mix was readied (~60 minutes). Two dry mixes were prepared, each containing about 25gm of powdered sugar and about 2.5gm of cocoa. Native seaweed was added at about350 ppm to one of the dry mixes, while the green gelling fibre of the present disclosure (prepared in Example 4, but with a maturation time of about 2 weeks) was added to the second dry mix, also at about 350 ppm. The dry mixes were added to the milk in respective beakers and stirred well to dissolve the mix completely. The beakers were covered with aluminum foil and placed in a water bath at about 80°C for about 30 minutes to about 40 minutes, stirring about every 10 minutes. The beakers were taken out and the chocolate milk was mixed well using a blender. The chocolate milk was transferred into 500 ml bottles and kept until room temperature was reached (about 40 minutes), stirring about every 2 minutes to 3 minutes. The bottles were then placed in a water bath maintained at about 15°C and mixed about every 2 minutes to 3 minutes. The chocolate milk cooled down in about 25 minutes to about 30 minutes. After the chocolate milk was chilled to about 15°C, it was placed at about 4°C, overnight. Samples were taken out after about 20 hours without disturbing the chocolate milk. The presence or absence of cocoa suspension was noted. It was observed that the native seaweed could not suspend the cocoa as desired, but the alkali matured gelling fibre was able to suspend the cocoa (Figure 6).

## Claims

1. A plant based gelling fibre having water gel strength ranging from 100 g/cm² to 1000 g/cm², and antioxidant capacity ranging from 2mg GAE/g dry weight to 10mg GAE/g dry weight.

2. The plant based gelling fibre as claimed in claim 1, wherein the plant is seaweed; wherein preferably the seaweed is red seaweed; and wherein more preferably the seaweed is of the order Rhodophyceae.

3. The plant based gelling fibre as claimed in claim 2 wherein the seaweed is selected from a group comprising *Kappaphycus striatus, Eucheuma cottonii, Eucheuma denticulatum (spinosum,) Halymenia durvillaea, Kappaphycus alvarezii, Chondrus crispus, Solieria chordalis, Porphyra purpurea, Euchuema isiforme, Hypnea musciformis, Solieria filiformis, Mastocarpus stellatus, Mastocarpus papillatus, Porphyra capensis, Gelidium amansii, Furcerllaria spp., Gigartina spp, Gracillaria spp., Iridea spp., Anatheca spp., Meristotheca spp., Ahnfeltia spp., Gynmogongrus spp., Phyllophora spp.* and combinations thereof.

4. The plant based gelling fibre as claimed in claim 1, wherein
i. the gelling fibre has mineral (ash) content ranging from 10% to 40% by dry weight;
ii. the gelling fibre has a viscosity ranging from 10cP to 300cP at 75°C for a gel prepared from 1.5% solution of the gelling fibre in water;
iii. the gelling fibre has a water gel strength ranging from 150 g/cm² to 350 g/cm₂;
iv. the gelling fibre has a pH ranging from 7 to 14; or
v. the gelling fibre is in a form selected from a group comprising fine powder, granules, wet pulp and wet paste.

5. The plant based gelling fibre as claimed in any of the preceding claims, wherein the gelling fibre has a gel strength at least 50% higher than that of the gel obtained from untreated plant source, and has at least 50% of antioxidant capacity as that present in the plant.

6. A method of producing the plant based gelling fibre as claimed in claim 1, comprising steps of:
a. obtaining pulp of the plant;
b. adjusting pH of the pulp to at least 12;
c. allowing maturation of the pH adjusted pulp for time 10 period ranging from 1 week to 4 weeks; and
d. optionally reducing pH of the matured pulp followed by milling the matured pulp to form the gelling fibre.

7. The method as claimed in claim 6, wherein the plant is seaweed; wherein the seaweed is fresh seaweed or dried seaweed; wherein when the seaweed is dried seaweed, the dried seaweed is rehydrated before use; wherein preferably the pulp is obtained from the seaweed by mechanical processing of the seaweed to separate the pulp from the juice.

8. The method as claimed in claim 6, wherein the maturation is at ambient temperature;
and wherein said temperature ranges from 20ₒC to 45ₒC.

9. The method as claimed in claim 6, wherein:
i. the pH of the pulp is adjusted to 12 to 14 by contacting the pulp with a pH modifying agent selected from a group comprising potassium hydroxide, sodium hydroxide, calcium hydroxide, magnesium hydroxide, ammonium hydroxide, lithium hydroxide, sodium carbonate and potassium carbonate or any combination thereof, and preferably the ratio of the pulp to the pH modifying agent ranges from 1:1 to 33:1 and the strength of the pH modifying agent ranges from 0.5M to 13M;
ii. the maturation occurs in conditions of darkness;
iii. the pH of the matured pulp is reduced by washing with washing agent selected from a group comprising water, separated plant juice and potassium chloride or any combination thereof, or by contacting the matured pulp with acidifying agent selected from a group comprising hydrochloric acid, sulfuric 5 acid, ascorbic acid, citric acid, citrus fruit juice, acetic acid, and any combination thereof, or both; and wherein the pH of the matured pulp is optionally reduced to 7 to 11;
iv. the strength of the acidifying agent ranges from 1M to 8M; and wherein ratio of the matured pulp to acidifying agent ranges from 20:1 to 100:1;
v. step (a) is followed by washing of the pulp performed with a washing agent selected from a group comprising fresh water, sea water and separated plant juice or any combination thereof;
vi. the gelling fibre has a gel strength at least 50% higher than that of the gel obtained from untreated plant source, and has at least 50% of antioxidant capacity as that present in the plant; or
vii. the milling is dry milling or wet milling; wherein the wet milling yields the gelling fibre in the form of a fine pulp and the dry milling yields the gelling fibre in the form of a fine powder.

10. The method as claimed in claim 7, wherein the amount of alkali employed for processing of the seaweed is reduced by 40% to 65%, when compared with commercially employed seaweed processing protocols.

11. The method as claimed in claim 6, wherein the gelling fibre is further used to prepare a gel; wherein the gel is prepared by heating and subsequent cooling and setting at a lower temperature; wherein preferably, when the gelling fibre is in the form of a fine pulp, it is mixed with water in a ratio of 0.05:1 to 0.075:1, the heating is carried out at a temperature of 80°C to 90°C for 30 minutes to 90 minutes followed by allowing the gel to set at a temperature of 4°C to 15°C for 12 hours to 16 hours; and wherein when the gelling fibre is in the form of a fine powder, it is mixed with water in a ratio of 0.01:1 to 0.015:1 to form a suspension which is then heated at a temperature of 80°C to 90°C for 30 minutes to 90 minutes followed by allowing the gel to set at a temperature of 4°C to 15°C for 12 to 16 hours; and wherein preferably the gel is fit for human or animal consumption.

12. Use of the plant based gelling fibre as claimed in claim 1 for preparing a gel or as a food additive; wherein preferably the gel is fit for human or animal consumption.

## Patentansprüche

1. Gelierende Faser auf pflanzlicher Basis mit einer Wasser-Gelstärke, die von 100 g/cm² bis 1000 g/cm² reicht, und einer antioxidativen Kapazität, die von 2 mg GAE/g Trockengewicht bis 10 mg GAE/g Trockengewicht reicht.

2. Gelierende Faser auf pflanzlicher Basis nach Anspruch 1, die Pflanze eine Alge ist, wobei vorzugsweise die Alge eine Rotalge ist und wobei mehr bevorzugt die Alge von der Ordnung Rhodophyceae ist.

3. Gelierende Faser auf pflanzlicher Basis nach Anspruch 2, wobei die Alge ausgewählt ist aus einer Gruppe umfassend *Kappaphycus striatus, Eucheuma cottonii, Eucheuma denticulatum (spinosum), Halymenia durvillaea, Kappaphycus alvarezii, Chondrus crispus, Solieria chordalis, Porphyra purpurea, Euchuema isiforme, Hypnea musciformis, Solieria filiformis, Mastocarpus stellatus, Mastocarpus papillatus, Porphyra capensis, Gelidium amansii, Furcellaria spp., Gigartina spp., Gracillaria spp., Iridea spp., Anatheca spp., Meristotheca spp., Ahnfeltia spp., Gynmogongrus spp., Phyllophora spp.* und Kombinationen davon.

4. Gelierende Faser auf pflanzlicher Basis nach Anspruch 1, wobei
i. die gelierende Faser einen Mineral(Asche)gehalt hat, der von 10 % bis 40 % reicht, bezogen auf das Trockengewicht;
ii. die gelierende Faser eine Viskosität hat, die von 10 cP bis 300cP bei 75 °C reicht, für ein Gel, hergestellt aus einer 1,5%igen Lösung der gelierenden Faser in Wasser;
iii. die gelierende Faser eine Wasser-Gelstärke hat, die von 150 g/cm² bis 350 g/cm² reicht;
iv. die gelierende Faser einen pH hat, der von 7 bis 14 reicht; oder
v. die gelierende Faser in einer Form ist, ausgewählt aus einer Gruppe umfassend feines Pulver, Granulat, nasse Pulpe und nasse Paste.

5. Gelierende Faser auf pflanzlicher Basis nach einem der vorhergehenden Ansprüche, wobei die gelierende Faser eine Gelstärke hat, die um mindestens 50 % höher als die des aus einer unbehandelten pflanzlichen Quelle erhaltenen Gels ist, und mindestens 50 % der antioxidativen Kapazität der in der Pflanze vorhandenen hat.

6. Verfahren zur Produktion der gelierenden Faser auf pflanzlicher Basis nach Anspruch 1, umfassend die Schritte von:
a. Erhalten von Pulpe von der Pflanze;
b. Einstellen des pH der Pulpe auf mindestens 12;
c. Reifenlassen der pH-eingestellten Pulpe für einen Zeitraum, der von 1 Woche bis 4 Wochen reicht; und
d. optional Reduzieren des pH der gereiften Pulpe, gefolgt von Mahlen der gereiften Pulpe, um die gelierende Faser zu bilden.

7. Verfahren nach Anspruch 6, wobei die Pflanze eine Alge ist; wobei die Alge eine frische Alge oder getrocknete Alge ist; wobei, wenn die Alge getrocknete Alge ist, die getrocknete Alge vor Gebrauch rehydriert wird; wobei vorzugsweise die Pulpe aus der Alge durch mechanische Verarbeitung der Alge erhalten wird, um die Pulpe von dem Saft zu trennen.

8. Verfahren nach Anspruch 6, wobei das Reifen bei Umgebungstemperatur ist und wobei die Temperatur von 20 °C bis 45 °C reicht.

9. Verfahren nach Anspruch 6, wobei:
i. der pH der Pulpe auf 12 bis 14 eingestellt wird, durch Inkontaktbringen der Pulpe mit einem Mittel zur Modifizierung des pH, ausgewählt aus einer Gruppe umfassend Kaliumhydroxid, Natriumhydroxid, Calciumhydroxid, Magnesiumhydroxid, Ammoniumhydroxid, Lithiumhydroxid, Natriumcarbonat und Kaliumcarbonat oder eine beliebige Kombination davon, und vorzugsweise das Verhältnis der Pulpe zu dem Mittel zur Modifizierung des pH von 1:1 bis 33:1 reicht und die Stärke des Mittels zur Modifizierung des pH von 0,5 M bis 13 M reicht;
ii. das Reifen unter Dunkelheitsbedingungen erfolgt;
iii. der pH der gereiften Pulpe durch Waschen mit einem Waschmittel, ausgewählt aus einer Gruppe umfassend Wasser, getrennten Pflanzensaft und Kaliumchlorid oder einer beliebigen Kombination davon, oder durch Inkontaktbringen der gereiften Pulpe mit einem Säuerungsmittel, ausgewählt aus einer Gruppe umfassend Salzsäure, Schwefelsäure 5, Ascorbinsäure, Citronensäure, Zitrusfruchtsaft, Essigsäure und einer beliebigen Kombination davon, oder beides, reduziert wird; und wobei der pH der gereiften Pulpe optional auf 7 bis 11 reduziert wird;
iv. die Stärke des Säuerungsmittels von 1 M bis 8 M reicht; und wobei das Verhältnis der gereiften Pulpe zu dem Säuerungsmittel von 20:1 bis 100:1 reicht;
v. auf Schritt (a) ein Waschen der Pulpe folgt, durchgeführt mit einem Waschmittel, ausgewählt aus einer Gruppe umfassend Frischwasser, Meerwasser und getrennten Pflanzensaft oder einer beliebigen Kombination davon;
vi. die gelierende Faser eine Gelstärke hat, die um mindestens 50 % höher als die des aus einer unbehandelten pflanzlichen Quelle erhaltenen Gels ist, und mindestens 50 % der antioxidativen Kapazität der in der Pflanze vorhandenen hat; oder
vii. das Mahlen ein Trockenmahlen oder Nassmahlen ist; wobei das Nassmahlen die gelierende Faser in der Form einer feinen Pulpe ergibt und das Trockenmahlen die gelierende Faser in der Form eines feinen Pulvers ergibt.

10. Verfahren nach Anspruch 7, wobei die Alkalimenge, eingesetzt zur Verarbeitung der Alge, um 40 % bis 65 % verringert wird, im Vergleich zu kommerziell eingesetzten Algenverarbeitungsprotokollen.

11. Verfahren nach Anspruch 6, wobei die gelierende Faser weiter verwendet wird, um ein Gel herzustellen; wobei das Gel durch Erhitzen und anschließendes Abkühlen und Abbinden bei einer niedrigeren Temperatur hergestellt wird; wobei vorzugsweise, wenn die gelierende Faser in der Form einer feinen Pulpe ist, sie mit Wasser in einem Verhältnis von 0,05:1 bis 0,075:1 gemischt wird, das Erhitzen bei einer Temperatur von 80 °C bis 90 °C für 30 Minuten bis 90 Minuten ausgeführt wird, gefolgt von einem Abbindenlassen des Gels bei einer Temperatur von 4 °C bis 15 °C für 12 Stunden bis 16 Stunden; und wobei, wenn die gelierende Faser in der Form eines feinen Pulvers ist, sie mit Wasser in einem Verhältnis von 0,01:1 bis 0,015:1 gemischt wird, um eine Suspension zu bilden, die dann bei einer Temperatur von 80 °C bis 90 °C für 30 Minuten bis 90 Minuten erhitzt wird, gefolgt von einem Abbindenlassen des Gels bei einer Temperatur von 4 °C bis 15 °C für 12 bis 16 Stunden; und wobei vorzugsweise das Gel für den Verzehr durch Menschen oder Tiere eingesetzt wird.

12. Verwendung der gelierenden Faser auf pflanzlicher Basis nach Anspruch 1 zur Herstellung eines Gels oder als ein Lebensmittelzusatzstoff; wobei vorzugsweise das Gel für den Verzehr durch Menschen oder Tiere eingesetzt wird.

## Revendications

1. Fibre gélifiante à base de plantes ayant une résistance au gel dans l'eau comprise dans la plage allant de 100 g/cm² à 1000 g/cm² et une capacité antioxydante comprise dans la plage allant de 2 mg GAE/g de poids sec à 10 mg GAE/g de poids sec.

2. Fibre gélifiante à base de plantes selon la revendication 1, dans laquelle la plante est une algue ; dans laquelle de préférence l'algue est une algue rouge ; et dans laquelle plus préférablement l'algue est de l'ordre des Rhodophycées.

3. Fibre gélifiante à base de plantes selon la revendication 2 dans laquelle l'algue est choisie dans un groupe comprenant ***Kappaphycus striatus, Eucheuma cottonii, Eucheuma denticulatum (spinosum), Halymenia durvillaea, Kappaphycus alvarezii, Chondrus crispus, Solieria chordalis, Porphyra purpurea, Euchuema isiforme, Hypnea musciformis, Solieria filiformis, Mastocarpus stellatus, Mastocarpus papillatus, Porphyra capensis, Gelidium amansii, Furcerllaria spp., Gigartina spp, Gracillaria spp., Iridea spp., Anatheca spp., Meristotheca spp., Ahnfeltia spp., Gynmogongrus spp., Phyllophora spp.*** et des combinaisons de celles-ci.

4. Fibre gélifiante à base à de plantes selon la revendication 1, dans laquelle
i. la fibre gélifiante a une teneur en minéraux (cendres) comprise dans la plage allant de 10 % à 40 % en poids sec ;
ii. la fibre gélifiante a une viscosité comprise dans la plage allant de 10 cP à 300 cP à 75 °C pour un gel préparé à partir d'une solution à 1,5 % de la fibre gélifiante dans de l'eau ;
iii. la fibre gélifiante a une résistance au gel dans l'eau comprise dans la plage allant de 150 g/cm² à 350 gjcm² ;
iv. la fibre gélifiante a un pH compris dans la plage allant de 7 à 14 ; ou
v. la fibre gélifiante est sous une forme choisie dans un groupe comprenant de la poudre fine, des granulés, de la pulpe humide et de la pâte humide.

5. Fibre gélifiante à base de plantes selon l'une quelconque des revendications précédentes, dans laquelle la fibre gélifiante a une résistance au gel au moins 50 % supérieure à celle du gel obtenu à partir d'une source végétale non traitée et a au moins 50 % de capacité antioxydante comme celle présente dans la plante.

6. Procédé de production de la fibre gélifiante à base de plantes selon la revendication 1, comprenant les étapes consistant à :
a. obtenir de la pulpe de la plante ;
b. ajuster le pH de la pulpe à au moins 12 ;
c. laisser maturer la pulpe à pH ajusté pendant une période comprise dans la plage allant de 1 semaine à 4 semaines ; et
d. éventuellement réduire le pH de la pulpe maturée puis broyer la pulpe maturée pour former la fibre gélifiante.

7. Procédé selon la revendication 6, dans lequel la plante est une algue ; dans lequel l'algue est une algue fraîche ou une algue séchée ; dans lequel lorsque l'algue est une algue séchée, l'algue séchée est réhydratée avant utilisation ; dans lequel de préférence la pulpe est obtenue à partir de l'algue par traitement mécanique de l'algue pour séparer la pulpe du jus.

8. Procédé selon la revendication 6, dans lequel la maturation est réalisée à température ambiante ; et dans lequel ladite température est comprise dans la plage de 20 °C à 45 °C.

9. Procédé selon la revendication 6, dans lequel :
i. le pH de la pulpe est ajusté à 12 à 14 par mise en contact de la pulpe avec un agent de modification du pH choisi dans un groupe comprenant l'hydroxyde de potassium, l'hydroxyde de sodium, l'hydroxyde de calcium, l'hydroxyde de magnésium, l'hydroxyde d'ammonium, l'hydroxyde de lithium, le carbonate de sodium et le carbonate de potassium ou une quelconque combinaison de ceux-ci ; et de préférence le rapport de la pulpe à l'agent de modification du pH est compris dans la plage allant de 1:1 à 33:1 et la résistance de l'agent de modification du pH est comprise dans la plage allant de 0,5 M à 13 M ;
ii. la maturation se produit dans des conditions d'obscurité ;
iii. le pH de la pulpe maturée est réduit par lavage avec un agent de lavage choisi dans un groupe comprenant de l'eau, du jus de plante séparé et du chlorure de potassium ou une quelconque combinaison de ceux-ci, ou par mise en contact de la pulpe maturée avec un agent acidifiant choisi dans un groupe comprenant l'acide chlorhydrique, l'acide sulfurique, l'acide ascorbique, l'acide citrique, le jus d'agrumes ou l'acide acétique, et une quelconque combinaison de ceux-ci, ou les deux ; et dans lequel le pH de la pulpe maturée est éventuellement réduit à 7 à 11 ;
iv. la résistance de l'agent acidifiant est comprise dans la plage allant de 1 M à 8 M ; et dans lequel le rapport de la pulpe maturée à l'agent acidifiant est compris dans la plage allant de 20:1 à 100:1 ;
v. l'étape (a) est suivie par le lavage de la pulpe réalisée avec un agent de lavage choisi dans un groupe comprenant de l'eau fraîche, de l'eau de mer et du jus de plante séparé ou une quelconque combinaison de ceux-ci ;
vi. la fibre gélifiante a une résistance au gel au moins 50 % supérieure à celle du gel obtenu à partir d'une source végétale non traitée et a au moins 50 % de capacité antioxydante comme celle présente dans la plante ; ou
vii. le broyage est un broyage à sec ou un broyage humide ; dans lequel le broyage humide donne la fibre gélifiante sous la forme d'une pulpe fine et le broyage à sec donne la fibre gélifiante sous la forme d'une poudre fine.

10. Procédé selon la revendication 7, dans lequel la quantité d'alcali utilisée pour le traitement de l'algue est réduite de 40 % à 65 %, par comparaison aux protocoles de traitement des algues utilisés dans le commerce.

11. Procédé selon la revendication 6, dans lequel la fibre gélifiante est en outre utilisée pour préparer un gel ; dans lequel le gel est préparé par chauffage et refroidissement et prise ultérieurs à une température inférieure ;dans lequel de préférence, lorsque la fibre gélifiante se présente sous la forme d'une pulpe fine, elle est mélangée à de l'eau selon un rapport de 0,05:1 à 0,075:1, le chauffage est effectué à une température de 80 °C à 90 °C pendant 30 minutes à 90 minutes suivi par le fait de laisser le gel prendre à une température de 4 °C à 15 °C pendant 12 heures à 16 heures ; et dans lequel lorsque la fibre gélifiante se présente sous la forme d'une poudre fine, elle est mélangée à de l'eau selon un rapport de 0,01:1 à 0,015:1 pour former une suspension qui est ensuite chauffée à une température de 80 °C à 90 °C pendant 30 minutes à 90 minutes suivi par le fait de laisser le gel prendre à une température de 4 °C à 15 °C pendant 12 à 16 heures ; et dans lequel de préférence le gel est approprié pour une consommation humaine ou animale.

12. Utilisation de la fibre gélifiante d'origine végétale selon la revendication 1 pour la préparation d'un gel ou comme additif alimentaire, dans laquelle le gel est approprié pour une consommation humaine ou animale.
